# EUROPEAN PATENT SPECIFICATION

(11) **EP 2 562 426 B1**
(45) Date of publication and mention of the grant of the patent: **07.12.2016**
(21) Application number: 12181310.9
(22) Date of filing: 22.08.2012
(51) Int. Cl.: F04D 29/02, F04D 29/28, F04D 29/62, F04D 29/059, F04D 29/057

(54) **Rotor assembly for a turbomachine**
Rotoranordnung für eine Turbomaschine
Ensemble rotor pour turbomachine

(30) Priority: 26.08.2011 GB 201114784
(43) Date of publication of application: 27.02.2013
(73) Proprietor: Dyson Technology Limited, Malmesbury, Wiltshire SN16 0RP (GB)
(72) Inventor: Ions, David, Malmesbury, Wiltshire SN16 0RP (GB); Jones, David, Malmesbury, Wiltshire SN16 0RP (GB)
(74) Representative: Lobban, Colin

(56) References cited:
- GB-A- 331 375
- GB-A- 2 467 967
- GB-A- 2 467 969
- JP-A- 2000 082 252
- JP-A- 2003 294 050
- US-A1- 2009 027 592
- US-B1- 6 447 631

## Description

The present invention relates to a rotor assembly for a turbomachine.

Eccentricity in the components of a rotor assembly adversely affects the performance. Accordingly, when manufacturing the rotor assembly, efforts are generally made to align the components concentrically as much as possible.

The rotor assembly may comprise a first component having a bore into which a second component is secured. The diameter of the bore may be sized such that the first component forms an interference fit with the second component. However, owing to tolerances in the bore, the axis of the bore may not be formed centrally through the first component. Consequently, when the first component is pressed onto the second component, the two components are not aligned concentrically. Alternatively, the diameter of the bore may be sized such that the first component forms a clearance fit with the second component. The two components are then secured by means of an adhesive. However, owing to tolerances in the diameter of the bore, the resulting clearance may be so large that adhesive leaks from between the two components prior to curing. Alternatively, the clearance may be so small that a uniform layer of adhesive is difficult to achieve or the period taken to introduce the adhesive is excessively long.

The patent application GB2467967 A1 discloses a rotor assembly manufacturing method where the two components are secured by means of an adhesive.

In a first aspect, the present invention provides a method of manufacturing a rotor assembly, the method comprising: providing a first component having a bore; providing a second component; applying a first adhesive to the bore or the second component; inserting the second component into the bore such that the first adhesive forms an annular seal between the first component and the second component; curing the first adhesive; introducing a second adhesive into a space between the first component and the second component, wherein the first adhesive acts as a stopper for the second adhesive, and the second adhesive has a lower viscosity than that of the first adhesive; and curing the second adhesive.

The first adhesive is therefore used to create an initial seal between the first component and the second component. After curing, the first adhesive acts as a stopper or plug for the second adhesive. This then permits the use of a second adhesive having a viscosity that would otherwise leak from between the two components. The method may therefore be employed to secure two components having a relatively large clearance. The first adhesive, having a higher viscosity, can be used to bridge the gap between the two components. The second adhesive, having a lower viscosity, can then be used to backfill the space between the two components in a time-efficient manner. Additionally, the use of an adhesive having a lower viscosity promotes the formation of a more uniform layer of adhesive between the two components.

The two components may be aligned concentrically prior to curing the first adhesive. Since the method may be used to secure components having a relatively large clearance, components having relatively poor tolerances may be aligned concentrically. It is therefore possible to manufacture a concentric rotor assembly without the need for high-precision manufacturing, which can be expensive and/or preclude the use of certain materials and processes.

The first adhesive may form the seal adjacent a first end of the bore. The second adhesive may then be introduced via a second end of the bore such that the second adhesive extends from the first adhesive to a position adjacent the second end. Consequently, an adhesive join is formed along a substantial part of the bore, thus providing a good securement between the first and second components.

The bore may be tapered and the second adhesive may be introduced via the end of the bore having the larger diameter. This then has the advantage that, as the adhesive rises within the space, air is driven out into an expanding volume and thus the risk of air entrapment is reduced.

The bore may have one or more axial grooves and the second adhesive may be introduced via the grooves. The grooves act to deliver the second adhesive down to the first adhesive, whereupon the second adhesive wicks around the first component. As the second adhesive continues to be introduced via the grooves, the second adhesive rises within the space so as to drive out any air. This then reduces the risk of air entrapment.

The bore may have a first end and a second end, and the grooves may extend from the second end and terminate prior to the first end. The first adhesive may then be located adjacent the first end. By terminating the grooves prior to the first end of the bore, the seal may be formed without requiring an excessive amount of first adhesive. Additionally, relatively deep grooves may be employed for a quicker delivery of the second adhesive.

The second adhesive may extend axially along a longer length than that of the first adhesive. Consequently, the strength of the adhesive join between the two components is determined primarily by the second adhesive. This then permits the use of a relatively cheap first adhesive for which the adhesive strength may be relatively poor.

The first component may be one of a shroud and an impeller, and the second component may form part of a sub-assembly comprising the other of the shroud and the impeller. The method may then comprise inserting the second component into the bore such that the shroud contacts the impeller, and separating the shroud and the impeller by a predetermined distance. This then has the advantage that a well-defined clearance is established between the shroud and the impeller.

The first component may be a shroud, the second component may be a bearing assembly, and the rotor assembly may comprise an impeller and a shaft to which the bearing assembly and the impeller are mounted. The method may then comprise inserting the bearing assembly into the bore of the shroud such that the shroud covers the impeller. In securing the shroud to the bearing assembly, the impeller is free to rotate relative to the shroud. Since the shroud forms part of the rotor assembly, displacement of the impeller due to vibration of the rotor assembly is accompanied by displacement of the shroud. Accordingly, the clearance between the impeller and the shroud is maintained irrespective of vibration of the rotor assembly. The method may further comprise aligning concentrically the shroud with one of the bearing assembly, the impeller and the shaft.

The first component and the second component may each comprise an o-ring seat, and the method may comprise aligning the first component and the second component such that the seats are aligned concentrically. Accordingly, the rotor assembly may be soft-mounted within a turbomachine by means of o-rings located within the seats. Furthermore, since the o-rings seats are aligned concentrically, misalignment or tilting of the rotor assembly within the turbomachine may be avoided.

In a second aspect, the present invention provides a rotor assembly manufactured using a method as described in the preceding paragraphs comprising a first component having a bore, and a second component secured within the bore by a first adhesive and a second adhesive, wherein the first adhesive forms an annular seal between the first component and the second component, and the second adhesive extends from the first adhesive and has a lower viscosity than that of the first adhesive.

In a third aspect, the present invention provides a turbomachine comprising a frame and a rotor assembly as described in the preceding paragraph, wherein the first component and the second component each comprise an o-ring seat and the rotor assembly is soft-mounted to the frame by an o-ring located in each seat.

In soft-mounting the rotor assembly to the frame, less of the vibration of the rotor assembly is translated to the frame. Additionally, there is reduced loading of the bearing assembly and the first flexural frequency of the rotor assembly is increased.

In order that the present invention may be more readily understood, an embodiment of the invention will now be described, by way of example, with reference to the accompanying drawings, in which:
Figure 1 is a sectional view of a turbomachine in accordance with the present invention;
Figure 2 is an exploded view of the rotor assembly of the turbomachine;
Figure 3 illustrates stages in the manufacture of the rotor assembly; and
Figure 4 is a sectional view of the adhesive join between the bearing assembly and the shroud of the turbomachine.

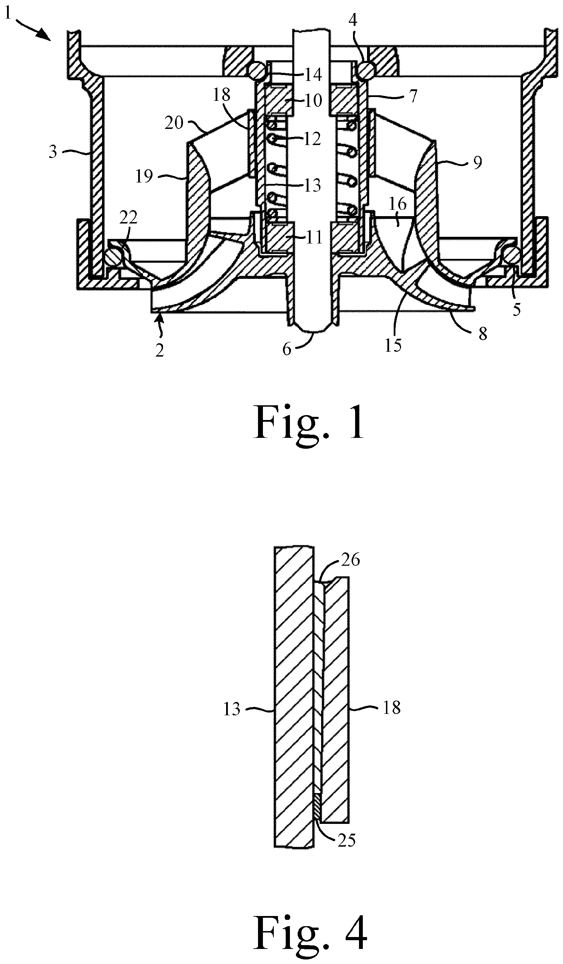

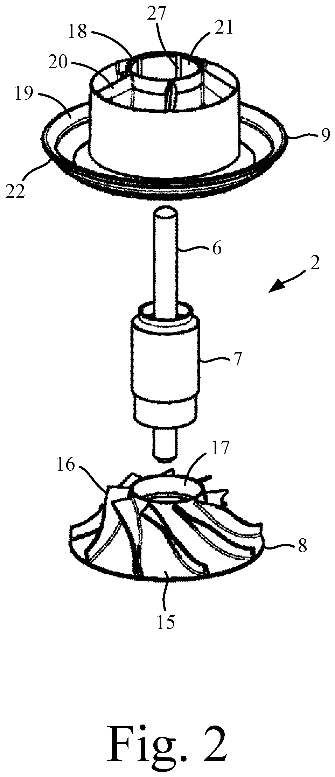

The turbomachine 1 of Figures 1 and 2 comprises a rotor assembly 2 mounted to a frame 3 by a pair of o-rings 4,5.

The rotor assembly 2 comprises a shaft 6, a bearing assembly 7, an impeller 8 and a shroud 9. The bearing assembly 7 and the impeller 8 are mounted to the shaft 6, and the shroud 9 is mounted to the bearing assembly 7 so as to cover the impeller 8.

The bearing assembly 7 comprises a pair of bearings 10,11, a spring 12, and a sleeve 13.

Each bearing 10,11 comprises an inner race, a cage supporting a plurality of balls, and an outer race. The bearings 10,11 are mounted to the shaft 6 on opposite sides of a stepped section. The inner race of each bearing 10,11 abuts the stepped section, which serves to space the two bearings 10,11 by a predetermined length.

The spring 12 surrounds the stepped section of the shaft 6 and applies an axial force to the outer races of the two bearings 10,11. Since the stepped section has a predetermined length and the spring 12 has a predetermined spring constant, each of the bearings 10,11 is preloaded with the same predetermined force.

The sleeve 13 surrounds the bearings 10,11 and the spring 12, and is secured to the outer race of each bearing 10,11 by an adhesive. An end of the sleeve extends axially beyond one of the bearings 10 and has a step down in diameter that defines a seat 14 for one of the o-rings 4.

The impeller 8 is a semi-open centrifugal impeller that comprises a base 15 and a plurality of blades 16. The base 15 has an aerodynamic upper surface around which the blades 16 are supported, and a central bore 17 through which the shaft 6 is received. The shaft 6 is then secured to the impeller 8 by interference fit and/or an adhesive join.

The shroud 9 comprises a hub 18, a hood 19 and a plurality of spokes 20 that extend radially between the hub 18 and the hood 19. The hub 18 is cylindrical and includes a central bore 21. The hood 19 is axially longer than the hub 18 and the spokes 20 extend between the hub 18 and an upper part of the hood 19. The inner surface of the hood 19 has an aerodynamic profile that corresponds to the edges of the blades 16 of the impeller 8. The outer perimeter of the hood 19 is shaped so as to define an annular seat 22 for the other of the o-rings 5.

The shroud 9 is secured to the bearing assembly 7 such that the shroud 9 covers the impeller 8. More particularly, the bearing assembly 7 extends through the bore in the hub 18 and is secured to the hub 18 by an adhesive.

The rotor assembly 2 is mounted to the frame 3 at both the bearing assembly 7 and at the shroud 9. More particularly, the rotor assembly 3 is soft mounted at each location by one of the o-rings 4,5. A first o-ring 4 is located in the seat 14 of the bearing assembly 7, and a second o-ring 5 is located in the seat 22 of the shroud 9.

During operation of the turbomachine 1, the rotor assembly 2 vibrates relative to the frame 3 due to out-of-balance forces. In mounting the shroud 9 to the bearing assembly 7, any displacement of the impeller 8 relative to the frame 3 is tracked by the shroud 9. As a result, the clearance between the impeller 8 and the shroud 9 is maintained irrespective of vibration. Accordingly, less noise is generated by the rotor assembly 2. In contrast, if the impeller 8 were to vibrate relative to the shroud 9, the vibration would compress and rarefy the surrounding air, thereby generating noise.

Mounting the shroud 9 to the bearing assembly 7 also enables a well-defined clearance to be established between the impeller 8 and the shroud 9. As described below, when manufacturing the rotor assembly 2, the impeller 8 and the shroud 9 can be brought into contact and then separated so as to establish a well-defined clearance. The clearance between the impeller 8 and the shroud 9 is not therefore influenced by the alignment of the rotor assembly 2 within the frame 3 of the turbomachine 1.

Mounting the shroud 9 to the bearing assembly 7 may also have benefits for a rotor assembly that is relatively flexible and/or is required to operate at or near the critical speed. For a conventional rotor assembly, vibration of the impeller relative to the shroud may be so great that the impeller-shroud clearance has to be increased in order to accommodate the vibration. Any increase in the clearance will, however, adversely affect the performance of the turbomachine. By mounting the shroud 9 to the bearing assembly 7, any vibration of the impeller 8 is tracked by the shroud 9. Accordingly, a smaller clearance may be employed, thereby improving the performance of the turbomachine 1.

The impeller 8 and/or the shroud 9 may be formed of materials or processes for which the dimensional and geometric tolerances might otherwise render them unsuitable for use in existing turbomachines. For example, the impeller 8 and the shroud 9 may be formed of plastic using a moulding process. By mounting the shroud 9 to the bearing assembly 7, a well-defined impeller-shroud clearance may nevertheless be obtained.

The provision of a bearing assembly 7 that comprises spaced bearings 10,11 surrounded by a sleeve 13 increases the stiffness of the rotor assembly 2. This in turn increases the frequency of the first flexural mode and thus the critical speed of the rotor assembly 2.

Since the bearings 10,11 are spaced by a predetermined distance and the spring 13 has a predetermined spring constant, the bearings 10,11 are preloaded with the same, well-defined force. The magnitude of the preload may therefore be defined so as to prevent skidding of the bearings 10,11 without the preload being excessive, which would otherwise result in poor bearing performance.

By projecting the bearing assembly 7 into the impeller 8, the axial length of the rotor assembly 2 is reduced. Furthermore, the cantilever length between the impeller 8 and the bearing assembly 7 is reduced and thus any out-of-balance forces acting on the impeller 8 will result in a smaller moment of force. Consequently, radial loading of the bearings 10,11 is reduced and thus the lifespan of the bearing assembly 7 is increased.

The rotor assembly 2 is mounted to the frame 3 at two locations that are spaced axially. This then provides good stability of the rotor assembly 2 within the frame 3. Additionally, the stiffness of the rotor assembly 2 is increased and thus a higher first flexural frequency is achieved. In soft-mounting the rotor assembly 2 to the frame 3, less of the vibration of the rotor assembly 2 is translated to the frame 3. Additionally, there is reduced loading of the bearing assembly 7 and the first flexural frequency of the rotor assembly 2 is increased. Nevertheless, in spite of the advantages of soft mounting, the rotor assembly 2 might conceivably be hard mounted to the frame 3 at one or more locations.

Any eccentricity in the alignment of the impeller 8 and the shroud 9 will result in a larger impeller-shroud clearance, which will adversely affect the performance of the turbomachine 1. Any eccentricity in the alignment of the two o-rings 4,5 will mean that the rotor assembly 2 is misaligned within the frame 3, i.e. the rotational axis of the rotor assembly 2 will be tilted. Again this is likely to adversely affect the performance of the turbomachine 1. By adhering the shroud 9 to the bearing assembly 7, the shroud 9 may be aligned concentrically with the shaft 6 prior to curing. Consequently, concentric alignment may be achieved between the impeller 8 and the shroud 9, and between the two o-rings 4,5.

The sleeve 13 of the bearing assembly 7 provides a relatively large surface over which the shroud 9 may be secured to the bearing assembly 7. As a result, a relatively good securement may be formed between the shroud 9 and the bearing assembly 7. Rather than employing an adhesive join, the shroud 9 may be secured to the bearing assembly 7 by interference fit. However, this then requires tighter tolerances on the inner diameter of the shroud 9 and the outer diameter of the bearing assembly 7 in order to ensure that the shroud 9 is concentrically aligned with the shaft 6. Tighter tolerances naturally increase the cost of the rotor assembly 2. By adhering the shroud 9 to the bearing assembly 7, concentricity may be achieved in a more cost effective manner. Moreover, manufacturing processes and materials may be used that would otherwise result in unacceptable tolerances for achieving an interference fit. For example, the shroud 9 may be formed of plastic by means of a moulding process without the need to machine the bore 21 of the shroud 9 after moulding.

The tolerance stack of the rotor assembly 2 may mean that a relatively large clearance is required between the shroud 9 and the bearing assembly 7 in order that the shroud 9 can be mounted concentrically. A large clearance may mean that the adhesive used to secure the shroud 9 to the bearing assembly 7 may leak from between the two components and contaminate the impeller 8 prior to curing. A higher viscosity adhesive may be used in order to prevent leaking. However, the time required to fill the space between the shroud 9 and the bearing assembly 7 then increases. Accordingly, a method will now be described that prevents adhesive leaking from between the shroud 9 and the bearing assembly 7 whilst maintaining a relatively fast filling time.

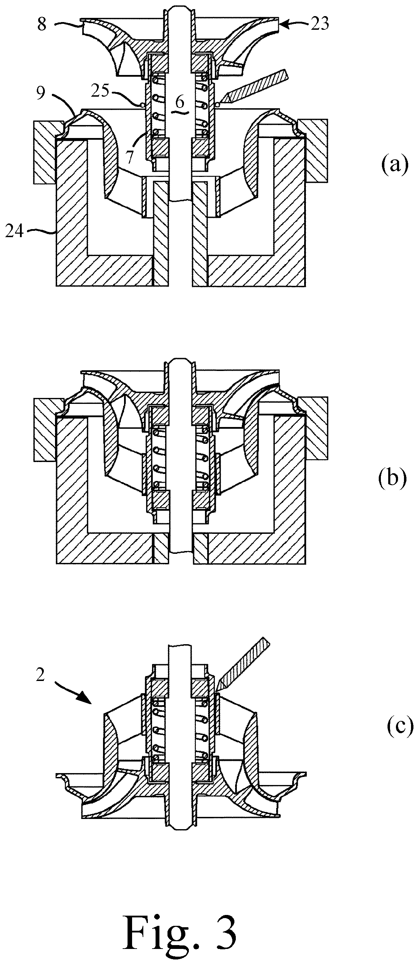

Referring now to Figure 3, the bearing assembly 7 and the impeller 8 are first secured to the shaft 6 to create a sub-assembly 23. The manner in which the bearing assembly 7 and the impeller 8 are secured to the shaft 6 is not pertinent to the present discussion. The sub-assembly 23 is mounted in one part of a jig 24 and the shroud 9 is mounted in another part. The jig 24 acts to align concentrically the o-ring seat 22 of the shroud 9 with the shaft 6.

The shroud 9 and the sub-assembly 23 are initially separated and a ring of high-viscosity adhesive 25 is applied to the bearing assembly 7, Figure 3(a). The shroud 9 and sub-assembly 23 are then brought together, causing the bearing assembly 7 to be inserted into the bore 21 of the shroud 9, Figure 3(b). The high-viscosity adhesive 25 forms an annular seal between the shroud 9 and the bearing assembly 7. Owing to the location at which the high-viscosity adhesive 25 is applied to the bearing assembly 7, the adhesive 25 forms the seal at a first end of the bore 21 of the shroud 9. The shroud 9 and the sub-assembly 23 are brought together such that the shroud 9 contacts the impeller 8, after which the shroud 9 and sub-assembly 23 are separated by a predetermined distance. This then serves to define the clearance between the impeller 8 and the shroud 9. The high-viscosity adhesive 25 is then cured and the rotor assembly 2 is removed from the jig 24.

The rotor assembly 2 is then inverted and a low-viscosity adhesive 26 is introduced into the space between the shroud 9 and the bearing assembly 7 via a second end of the bore 21, Figure 3(c). The high-viscosity adhesive 25 acts as a stopper or plug for the low-viscosity adhesive 26, which rises within and fills the remainder of the space between the shroud 9 and the bearing assembly 7.

The bore 21 of the shroud 9 comprises one or more axial grooves 27, see Figure 2. The low-viscosity adhesive 26 is introduced via the grooves 27, which act to deliver the low-viscosity adhesive 26 down to the high-viscosity adhesive 25. As the low-viscosity adhesive 26 continues to be introduced via the grooves 27, the adhesive 26 rises within the space between the shroud 9 and the bearing assembly 7 so as to drive out any air. This then reduces the risk of air entrapment, which would otherwise result in a weaker adhesive join. Additionally, the bore 21 of the shroud 9 is tapered. More particularly, the bore 21 tapers from the first end to the second end such that the second end is larger in diameter. Consequently, as the low-viscosity adhesive 26 rises, the air is driven out into an expanding volume, thus further reducing the risk of air entrapment.

The grooves 27 start at the second end of the bore 21 and terminate prior to the first end. This is an artefact of the moulding process used to manufacture the shroud 9. Nevertheless, there are advantages in terminating the grooves 27 prior to the first end of the bore 21. If the grooves 27 were to extend along the full length of the bore 21, there is a possibility that the high-viscosity adhesive 25 may fail to penetrate fully into one or more grooves 27; this will, of course, depend on the depth of the grooves 27 as well as the amount of high-viscosity adhesive 25 that is applied to the bearing assembly 7. As a result, the high-viscosity adhesive 25 may fail to form a complete seal between the shroud 9 and the bearing assembly 7. By terminating the grooves 27 prior to the first end of the bore 21, a complete seal can be formed without requiring an excessive amount of high-viscosity adhesive 25. Additionally, relatively deep grooves 27 may be employed for a quicker delivery of the low-viscosity adhesive 26.

The second end of the bore 21 is chamfered, see Figure 4. The chamfered portion serves as a reservoir for the rising low-viscosity adhesive 26. Consequently, tight controls on the amount of adhesive 26 introduced into the space between shroud 9 and bearing assembly 7 are not required.

After the low-viscosity adhesive 26 has been introduced, the adhesive 26 is cured. As illustrated in Figure 4, the net result is that the high-viscosity adhesive 25 is located at the first end of the bore 21 of the shroud 9. The low-viscosity adhesive 26 then extends from the high-viscosity adhesive 25 to the second end of the bore 21. By employing two adhesives of different viscosity, the shroud 9 may be secured to the bearing assembly 7 relatively quickly without adhesive leaking from the between the two components. Moreover, by using a low-viscosity adhesive 26 to fill the space between the shroud 9 and the bearing assembly 7, any air that might be trapped on introducing the adhesive 26 is better able to rise to the top and escape. Consequently, the low-viscosity adhesive 26 promotes a more uniform layer of adhesive between the shroud 9 and the bearing assembly 7.

The low-viscosity adhesive 26 extends axially along a longer length of the bore 21 than that of the high-viscosity adhesive 25. The low-viscosity adhesive 26 is therefore intended to provide the bulk of the strength of the adhesive join between the shroud 9 and the bearing assembly 7. In contrast, the high-viscosity adhesive 25 is intended primarily to serve as a stopper for the low-viscosity adhesive 26. Consequently, a relatively cheap high-viscosity adhesive 25 may be employed for which the adhesive strength may be relatively poor.

In the method described above, the shroud 9 is mounted to a sub-assembly 23 for which the impeller 8 is already mounted to the shaft 6. Accordingly, it is only possible to insert the bearing assembly 7 into the bore 21 of the shroud 9 via the first end. Conceivably, however, the impeller 8 may be mounted to the shaft 6 after the shroud 9 has been mounted to the sub-assembly 23. In this instance, the bearing assembly 7 may be inserted into the bore 21 of the shroud 9 via the first end or the second end. Accordingly, the high-viscosity adhesive 25 may be applied to the bearing assembly 7 and/or the bore 21 of the shroud 9.

The method described above might equally or alternatively be used to secure other components of the rotor assembly 2, particularly when the size of the clearance between the components precludes the use of certain adhesives. For example, the dimensional tolerances associated with the impeller 8 may mean that the bore 17 of the impeller 8 must be relatively large in order that the outer diameter of the impeller 8 can be aligned concentrically with the shaft 6. The method may therefore be used to adhere the impeller 8 to the shaft 6. In this instance, a ring of high-viscosity adhesive is first applied to the shaft 6 and/or the bore 17 of the impeller 8. The shaft 6 is then inserted into the bore 17 of the impeller 8. Depending upon the order in which the rotor assembly 2 is manufactured, the impeller 8 may be made to contact the shroud 9 and then separated so as to define the impeller-shroud clearance. The high-viscosity adhesive is then cured and a low-viscosity adhesive is introduced into the space between the impeller 8 and the shaft 6. Finally, the low-viscosity adhesive is cured.

The method is therefore appropriate for securing components of a rotor assembly having a relatively large clearance in a time-efficient manner. Moreover, since the clearance may be large, the method may be used to secure components having relatively poor tolerances. In spite of the poor tolerancing, the components may nevertheless be aligned and secured concentrically. Accordingly, the method may be used to manufacture a concentric rotor assembly without the need for high-precision manufacturing, which can be expensive and/or preclude the use of certain materials and processes.

Although reference has been made to a high-viscosity adhesive and a low-viscosity adhesive, these labels have been employed merely to indicate that the two adhesives are of different viscosity. The labels should not be understood as providing any indication of the absolute viscosities of the adhesives.

## Claims

1. A method of manufacturing a rotor assembly (2), the method comprising:
providing a first component having a bore (17, 21);
providing a second component;
applying a first adhesive (25) to the bore (17, 21) or the second component;
inserting the second component into the bore (17, 21) such that the first adhesive (25) forms an annular seal between the first component and the second component;
curing the first adhesive (25);
**characterised by** the method further comprising:
introducing a second adhesive (26) into a space between the first component and the second component, wherein the first adhesive (25) acts as a stopper for the second adhesive (26), and the second adhesive (26) has a lower viscosity than that of the first adhesive (25); and
curing the second adhesive (26).

2. A method as claimed in claim 1, wherein the bore (17,21) has a first end and a second end, the first adhesive (25) forms the seal at a position adjacent the first end, the second adhesive (26) is introduced via the second end and extends from the first adhesive (25) to a position adjacent the second end.

3. A method as claimed in claim 1 or 2, wherein the bore (17, 21) is tapered and the second adhesive (26) is introduced via the end of the bore (17, 21) having the larger diameter.

4. A method as claimed in any one of the preceding claims, wherein the bore (17, 21) has one or more axial grooves (27) and the second adhesive (26) is introduced via the grooves (27).

5. A method as claimed in claim 4, wherein the grooves (27) extend from an end of the bore (17, 21) and terminate prior to an opposite end of the bore (17, 21).

6. A method as claimed in any one of the preceding claims, wherein the second adhesive (26) extends axially along a longer length than that of the first adhesive (25).

7. A method as claimed in any one of the preceding claims, wherein the first component is one of a shroud (9) and an impeller (8), the second component forms part of a sub-assembly (23) comprising the other of the shroud (9) and the impeller (8), and the method comprises inserting the second component into the bore (17, 21) such that the shroud (9) contacts the impeller (8), and separating the shroud (9) and the impeller (8) by a predetermined distance.

8. A method as claimed in any one of the preceding claims, wherein the first component is a shroud (9), the second component is a bearing assembly (7), the rotor assembly (2) comprises an impeller (8) and a shaft (6) to which the bearing assembly (7) and the impeller (8) are mounted, and the method comprises inserting the bearing assembly (7) into the bore (21) of the shroud (9) such that the shroud (9) covers the impeller (8).

9. A method as claimed in claim 8, wherein the method comprises aligning concentrically the shroud (9) with one of the bearing assembly (7), the impeller (8) and the shaft (6).

10. A method as claimed in any one of the preceding claims, wherein the first component and the second component each comprise an o-ring seat (14, 22), and the method comprises aligning the first component and the second component such that the seats (14, 22) are aligned concentrically.

11. A rotor assembly (2) manufactured using a method as claimed in any one of the preceding claims comprising a first component having a bore (17, 21), and a second component secured within the bore (17, 21) by a first adhesive (25), wherein the first adhesive (25) forms an annular seal between the first component and the second component, **characterised in that** the second component is further secured within the bore (17, 21) by a second adhesive (26) and the second adhesive (26) extends from the first adhesive (25) and has a lower viscosity than that of the first adhesive (25).

12. A rotor assembly as claimed in claim 11, wherein the first component is a shroud (9), the second component is a bearing assembly (7), and the rotor assembly (2) comprises an impeller (8) and a shaft (6) to which the bearing assembly (7) and the impeller (8) are mounted, and the shroud (9) is secured to the bearing assembly (7) so as to cover the impeller (8).

13. A turbomachine (1) comprising a frame (3) and a rotor assembly (2) as claimed in claim 11 or 12, wherein the first component and the second component each comprise an o-ring seat (14, 22) and the rotor assembly (2) is soft-mounted to the frame (3) by an o-ring (4, 5) located in each seat (14, 22).

## Patentansprüche

1. Herstellungsverfahren für eine Rotorbaugruppe (2), wobei das Verfahren Folgendes umfasst:
Bereitstellung eines ersten Bauteils, das über eine Bohrung verfügt (17, 21);
Bereitstellung eines zweiten Bauteils;
Aufbringung eines ersten Klebstoffs (25) auf die Bohrung (17, 21) oder das zweite Bauteil;
Einführung des zweiten Bauteils in die Bohrung (17,21) sodass der erste Klebstoff (25) eine Ringabdichtung zwischen dem ersten Bauteil und dem zweiten Bauteil formt;
Aushärtung des ersten Klebstoffs (25);
**dadurch gekennzeichnet, dass** dieses Verfahren ebenfalls Folgendes umfasst:
Einführung eines zweiten Klebstoffs (26) in einen Raum zwischen dem ersten Bauteil und dem zweiten Bauteil, wobei der erste Klebstoff (25) als Stopper für den zweiten Klebstoff (26) fungiert und der zweite Klebstoff (26) eine geringere Viskosität als der erste Klebstoff (25) besitzt; sowie
die Aushärtung des zweiten Klebstoffs (26).

2. Verfahren nach Anspruch 1, wobei die Bohrung (17, 21) ein erstes Ende und ein zweites Ende hat, der erste Klebstoff (25) die Abdichtung an einer Position in der Nähe des ersten Endes bildet, der zweite Klebstoff (26) über das zweite Ende eingeführt wird und sich vom ersten Klebstoff (25) bis zu einer Position in der Nähe des zweiten Endes erstreckt.

3. Verfahren nach Anspruch 1 oder 2, wobei die Bohrung (17, 21) konisch geformt ist und der zweite Klebstoff (26) über das Ende der Bohrung (17, 21) eingeführt wird, das den größeren Durchmesser hat.

4. Verfahren nach einem der vorhergehenden Ansprüche, wobei die Bohrung (17, 21) einen oder mehrere axiale Schlitze (27) aufweist und der zweite Klebstoff (26) über diese Schlitze (27) eingeführt wird.

5. Verfahren nach Anspruch 4, wobei sich die Schlitze (27) von einem Ende der Bohrung (17, 21) aus erstrecken und vor einem gegenüberliegenden Ende der Bohrung (17, 21) enden.

6. Verfahren nach einem der vorhergehenden Ansprüche, wobei sich der zweite Klebstoff (26) axial entlang einer längeren Länge erstreckt, als der des ersten Klebstoffs (25).

7. Verfahren nach einem der vorhergehenden Ansprüche, wobei das erste Bauteil eine Ummantelung (9) und ein Gebläserad (8) umfasst, das zweite Bauteil einen Teil einer Unterbaugruppe (23) bildet, welche die andere Ummantelung (9) und das andere Gebläserad (8) umfasst, und das Verfahren die Einführung des zweiten Bauteils in die Bohrung (17, 21) umfasst, sodass die Ummantelung (9) Kontakt zum Gebläserad (8) hat und dass die Ummantelung (9) und das Gebläserad (8) um eine vorgegebene Distanz beabstandet sind.

8. Verfahren nach einem der vorhergehenden Ansprüche, wobei das erste Bauteil eine Ummantelung (9) ist, das zweite Bauteil eine Lagerbaugruppe (7) ist, die Rotorbaugruppe (2) ein Gebläserad (8) und eine Welle (6) umfasst, auf welche die Lagerbaugruppe (7) und das Gebläserad (8) montiert sind, und wobei das Verfahren die Einführung der Lagerbaugruppe (7) in die Bohrung (21) der Ummantelung (9) umfasst, sodass die Ummantelung (9) das Gebläserad (8) bedeckt.

9. Verfahren nach Anspruch 8, wobei das Verfahren die konzentrische Ausrichtung der Ummantelung (9) zu einer der Komponenten Lagerbaugruppe (7), Gebläserad (8) oder Welle (6) umfasst.

10. Verfahren nach einem der vorhergehenden Ansprüche, wobei das erste Bauteil und das zweite Bauteil je eine Ringauflagefläche (14, 22) umfassen, und wobei das Verfahren die Ausrichtung des ersten Bauteils und des zweiten Bauteils umfasst, sodass die Sitzflächen (14, 22) konzentrisch ausgerichtet werden.

11. Rotorbaugruppe (2), hergestellt gemäß eines in den vorhergehenden Ansprüchen beschriebenen Verfahrens, die ein erstes Bauteil mit einer Bohrung (17, 21) umfasst, und ein zweites Bauteil, das innerhalb der Bohrung (17, 21) durch einen ersten Klebstoff (25) gesichert wird, wobei der erste Klebstoff (25) eine Ringdichtung zwischen dem ersten Bauteil und dem zweiten Bauteil bildet, **dadurch gekennzeichnet, dass** das zweite Bauteil darüber hinaus innerhalb der Bohrung (17, 21) durch einen zweiten Klebstoff (26) gesichert wird und dass sich der zweite Klebstoff (26) vom ersten Klebstoff (25) ausgehend erstreckt und eine geringere Viskosität hat als die des ersten Klebstoffs (25).

12. Rotorbaugruppe nach Anspruch 11, wobei das erste Bauteil eine Ummantelung (9) ist, das zweite Bauteil eine Lagerbaugruppe (7) ist, und wobei die Rotorbaugruppe (2) ein Gebläserad (8) und eine Welle (6) umfasst, an der die Lagerbaugruppe (7) und das Gebläserad (8) montiert sind, und wobei die Ummantelung (9) an der Lagerbaugruppe (7) gesichert wird, sodass sie das Gebläserad (8) bedeckt.

13. Turbomaschine (1), einen Rahmen (3) und eine Rotorbaugruppe (2) nach Anspruch 11 oder 12 umfassend, wobei das erste Bauteil und das zweite Bauteil je eine Ringsitzfläche (14, 22) umfassen und die Rotorbaugruppe (2) weichgelagert am Rahmen (3) mittels einer Ringdichtung (4, 5) montiert ist, die sich in jeder Sitzfläche (14, 22) befindet.

## Revendications

1. Procédé de fabrication d'un assemblage de rotor (2), comprenant :
la fourniture d'un premier composant avec alésage (17, 21) ;
la fourniture d'un second composant ;
l'application d'un premier adhésif (25) sur l'alésage (17, 21), ou sur le second composant ;
l'insertion du second composant dans l'alésage (17, 21) de façon que le premier adhésif (25) forme un joint annulaire entre le premier et le second composant ;
le durcissement du premier adhésif (25),
**caractérisé en ce que** le procédé comprend en outre :
l'introduction d'un second adhésif (26) dans un espace compris entre le premier composant et le second composant, étant entendu que le premier adhésif (25) agit à la manière d'un bouchon pour le second adhésif (26), et que le second adhésif (26) possède une viscosité inférieure à celle du premier adhésif (25) ; et
le durcissement du second adhésif (26).

2. Procédé selon la revendication 1, dans lequel l'alésage (17, 21) possède une première terminaison et une seconde terminaison, en ce que le premier adhésif (25) forme un joint en une position adjacente à la première terminaison, le second adhésif (26) étant introduit par la seconde terminaison et s'étendant du premier adhésif (25) jusqu'à une position adjacente à la seconde terminaison.

3. Procédé selon la revendication 1 ou 2, dans lequel l'alésage (17, 21) est couvert et en ce que le second adhésif (26) est introduit par la terminaison de l'alésage (17, 21) ayant le plus grand diamètre.

4. Procédé selon l'une quelconque des revendications précédentes, dans lequel l'alésage (17, 21) possède un ou plusieurs sillons axiaux (27) et en ce que le second adhésif (26) est introduit par les sillons (27).

5. Procédé selon la revendication 4, dans lequel les sillons (27) s'étendent à partir d'une terminaison de l'alésage (17, 21) et se terminent avant d'atteindre une extrémité opposée de l'alésage (17, 21).

6. Procédé selon l'une quelconque des revendications précédentes, dans lequel le second adhésif (26) s'étend de façon axiale sur une longueur supérieure à celle du premier adhésif (25).

7. Procédé selon l'une quelconque des revendications précédentes, dans lequel le premier composant est celui d'un boîtier (9) et d'une roue à aubes (8), le second composant est une partie d'un sous-assemblage (23) comprenant l'autre parmi boîtier (9) et roue à aubes (8), et en ce que le procédé comprend l'insertion du second composant dans l'alésage (17, 21) de façon telle que le boîtier (9) entre en contact avec le rotor (8) et, en outre, comprend la séparation de l'hélice (9) et la roue à aubes (8) à une distance prédéterminée.

8. Procédé selon l'une quelconque des revendications précédentes, dans lequel le premier composant est un boîtier (9), le second composant est un assemblage de roulement (7), l'assemblage de rotor (2) comprend une roue à aubes (8) et une tige (6) sur laquelle sont montés l'assemblage de roulement (7) et la roue à aubes (8), et le procédé comprend l'insertion de l'assemblage de rotor (7) dans l'alésage (21) du boîtier (9), de façon telle que le boîtier (9) couvre la roue à aubes (8).

9. Procédé selon la revendication 8, dans lequel le procédé comprend l'alignement du boîtier (9) de façon concentrique sur l'une des composantes suivantes : assemblage de roulement (7), roue à aubes (8) et tige (6).

10. Procédé selon l'une quelconque des revendications précédentes, dans lequel le premier composant et le second composant comprennent, chacun, le siège d'un joint torique (14, 22), et le procédé comprend l'alignement du premier composant et du second composant de sorte que leurs sièges (14, 22) sont alignés de façon concentrique.

11. Assemblage de rotor (2) fabriqué à l'aide d'un procédé selon l'une quelconque des revendications précédentes, comprenant un premier composant ayant un alésage (17, 21) et un second composant maintenu en toute sécurité dans l'alésage (17, 21) par un premier adhésif (25), dans lequel le premier adhésif (25) forme un joint annulaire entre le premier composant et le second composant, **caractérisé en ce que** le second composant est maintenu en sécurité dans l'alésage (17, 21) par un second adhésif (26) et **en ce que** le second adhésif (26) s'étend à partir du premier adhésif (25) et possède une viscosité inférieure à celle du premier adhésif (25).

12. Assemblage de rotor selon la revendication 11, dans lequel le premier composant est un boîtier (9), le second composant est un assemblage de roulement (7), et l'assemblage de rotor (2) comprend une roue à aubes (8) et une tige (6) sur laquelle l'assemblage de roulement (7) et la roue à aubes (8) sont montés, et le boîtier (9) est maintenu fermement sur l'assemblage de rotor (7) de manière à couvrir la roue à aubes (8).

13. Turbomachine (1) comprenant un cadre (3) et un assemblage de rotor (2) selon la revendication 11 ou 12, dans lequel le premier composant et le second composant comprennent chacun le siège d'un joint torique (14, 22) et en ce que l'assemblage de rotor (2) est assujetti sur le cadre (3) de façon souple à l'aide d'un joint torique (4, 5) situé dans leur siège respectif (14, 22).
